# EUROPÄISCHE PATENTSCHRIFT

(11) **EP 0 459 307 B1**
(45) Veröffentlichungstag und Bekanntmachung des Hinweises auf die Patenterteilung: **12.04.1995**
(21) Anmeldenummer: 91108391.3
(22) Anmeldetag: 24.05.1991
(51) Int. Cl.: B01D 46/24

(54) **Filteranordnung mit mehreren Trommelfiltern**
Filtering device with a plurality of filtering tubes
Dispositif filtrant comportant plusieurs éléments filtrants tubulaires

(30) Priorität: 29.05.1990 DE 4017206
(43) Veröffentlichungstag der Anmeldung: 04.12.1991
(73) Patentinhaber: LTG LUFTTECHNISCHE GMBH, D-70405 Stuttgart (DE)
(72) Erfinder: Stüble, Helmut, Spartanburg, SC 29302 (US)
(74) Vertreter: Grosse, Rainer, Dipl.-Ing.

(56) Entgegenhaltungen:
- EP-A- 0 044 106
- US-A- 3 843 408
- US-A- 4 154 588
- US-A- 4 293 320

## Beschreibung

Die Erfindung betrifft eine Filteranordnung mit mehreren Trommelfiltern, nach dem Oberbegriff des Patentanspruchs 1. Derartige Filteranordnungen werden von der Anmelderin hergestellt.

Eine Filteranordnung der eingangs genannten Art geht aus der US-A-4 154 588 hervor. An der Innenseite einer zylindrischen Filtertrommel ist eine schraubenlinienförmige Führungsstange angeordnet. Entlang der Längsmittelachse der Filtertrommel verläuft ein drehbar angetriebenes Rohr, das über einen Schlauch mit einem entlang der schraubenlinienförmigen Führungsstange verfahrbaren Schlitten verbunden ist, wodurch mittels der Schlauchöffnung die Innenseite der Filtertrommel entlang der schraubenlinienförmigen Bahn abgesaugt werden kann.

Aus der US-A-3 843 408 geht ein Verfahren zur Reinigung von Luftfiltern hervor, bei dem in das Filter ein mit Spritzduse versehenes Rohr einfahrbar ist. Zur Reinigung wird mittels der Spritzdüse die Innenseite des Filters mit Wasser abgespritzt, wobei das sich ergebende Schmutzwasser von derselben Vorrichtung wieder abgesaugt werden kann.

Der Erfindung liegt die Aufgabe zugrunde, eine Filteranordnung der eingangs genannten Art zu schaffen, deren Aufwand minimiert ist.

Diese Aufgabe wird erfindungsgemäß dadurch gelöst, daß der Saugrüssel an einem Endbereich eines drehbaren, im anderen Endbereich fliegend gelagerten Saugrohres angeordnet ist und daß dessen einer Endbereich oder das Saugrohr in seiner Längserstreckung und somit in Längserstreckung des Trommelfilters hin- und herbewegbar ausgebildet ist, um durch die Kombination dieser Hin- und Her-Verschiebebewegung und der Drehbewegung die Saugöffnung des Saugrüssels auf einer schraubenlinienförmigen Bahn an der gekrümmten, zylindrischen Innenseite des Trommelfilters entlangzubewegen, wobei ferner das Saugrohr mit dem Saugrüssel vollständig aus dem Trommelfilter in Richtung der Verschiebebewegung heraus bewegbar, quer zur Verschiebebewegung verfahrbar und in mindestens ein benachbartes Trommelfilter zum Absaugen wieder einfahrbar ist. Hierdurch werden Absaugeinrichtungen eingespart.

Die fliegende Lagerung ermöglicht es, daß der Saugrüssel in Längsrichtung des Trommelfilters in das Trommelfilter ein- und herausgefahren werden kann und ferner erlaubt diese Lagerung die Drehung des Saugrohres um seine Längsachse, so daß sich insgesamt zum Absaugen des Trommelfilters ein schraubenlinienförmiger Weg einstellt. Nicht jedem Trommelfilter muß eine Absaugvorrichtung zugeordnet sein, da die -bei bestimmten Ausführungsbeispielen- Absaugvorrichtung jedem der zu reinigenden Trommelfilter zugeordnet werden kann. Hierzu läßt sich das Saugrohr entlang seiner Längserstreckung vollständig aus dem gerade gereinigten Trommelfilter herausfahren. Anschließend läßt sich das Saugrohr quer zu der Herausfahrbewegung verfahren. Dies kann -bei den bestimmten Ausführungsbeispielen- in beliebiger Weise in Richtung von x- und y-Koordinaten einer Ebene erfolgen, die quer zur Längserstrejckung der Trommelfilter verläuft. Entsprechend einer Vorgabe kann dann ein beliebiges weiteres benachbartes Trommelfilter angefahren werden, in das -zum Absaugen- das Saugrohr mit dem zugehörigen Saugrüssel einfahrbar ist.

Vorzugsweise sind mehrere Saugrüssel beabstandet parallel zueinander angeordnet, wobei die Abstände den Abständen der Mittellinien mehrerer Trommelfilter der Filteranordnung entsprechen Gleichzeitig können dann mehrere Trommelfilter gereinigt werden und es ist möglich, bei einem Herausfahren aus diesen Trommelfiltern eine entsprechende Anzahl benachbarter Trommelfilter gleichzeitig zu reinigen.

Mit besonderem Vorteil wird dabei die Filteranordnung gemäß Anspruch 17 ausgebildet, da man so mit geringem apparativem Aufwand mehrere Kolumnen von Trommelfiltern nacheinander absaugen kann.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Figur 1: eine raumbildliche Darstellung eines ersten Ausführungsbeispiels einer erfindungsgemäßen Filteranordnung, hier mit zwölf nach Art einer Matrix angeordneten Trommelfiltern und einer Vorrichtung, welche jeweils drei dieser zwölf Filter gleichzeitig absaugt,
- Figur 2: einen Schnitt, gesehen längs der Linie II-II der Figur 1,
- Figur 3: einen Schnitt, gesehen längs der Linie III-III der Figur 4,
- Figur 4: eine Seitenansicht eines Saugrüssels, wobei das Trommelfilter nur zum Teil und geschnitten dargestellt ist,
- Figur 5: eine Darstellung des Antriebs der Saugrohre, gesehen in Richtung des Pfeiles V der Figur 6,
- Figur 6: einen Schnitt, gesehen längs der Linie VI-VI der Figur 5,
- Figur 7: ein zweites Ausführungsbeispiel einer erfindungsgemäßen Anordnung, hier mit einem Scherenantrieb,
- Figur 8: eine Einzelheit einer bevorzugten Absaugvorrichtung,
- Figur 9: eine Draufsicht von oben auf ein drittes Ausführungsbeispiel einer erfindungsgemäßen Filteranordnung,
- Figur 10: eine Schnittdarstellung des dritten Ausführungsbeispiels,
- Figur 11: einen Schnitt, gesehen längs der Linie XI-XI der Figur 10 und
- Figur 12: ein viertes Ausführungsbeispiel der Erfindung, welches eine Variante für das Saugrohr zeigt.

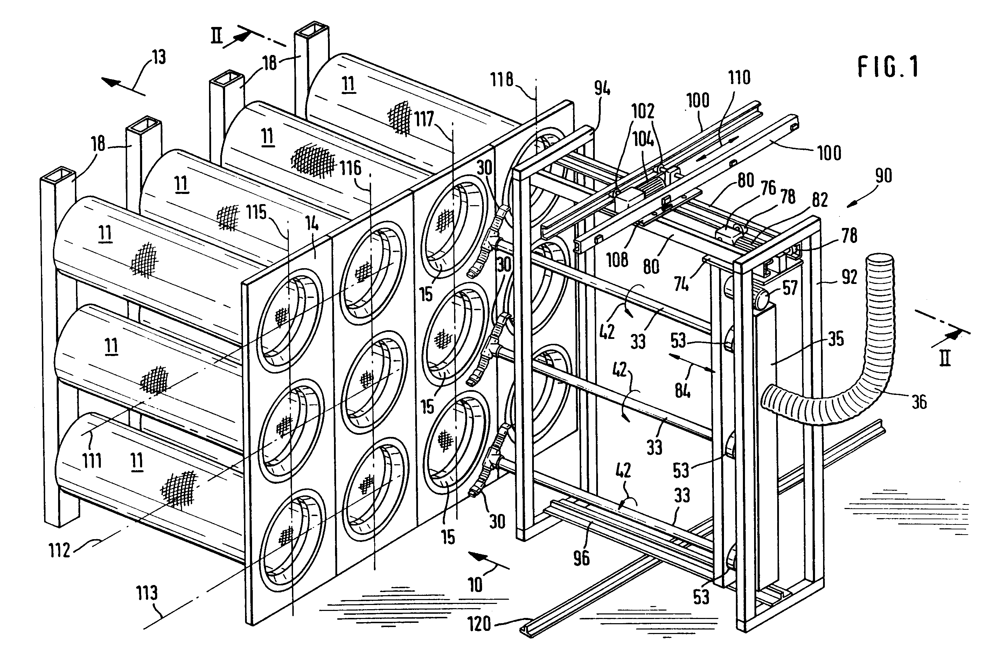

Figur 1 zeigt ein bevorzugtes Ausführungsbeispiel einer erfindungsgemäßen Filteranordnung. Diese hat ungefähr die Größe eines Zimmers. Die Luft mit Fasern, Staub oder dergleichen, zum Beispiel in Spinnereien und sonstigen Textilbetrieben, kommt in Richtung des Pfeiles 10, strömt durch Trommelfilter 11, von denen zwölf Stück in einer Matrix angeordnet sind und strömt gereinigt in Richtung des Pfeiles 13 ab.

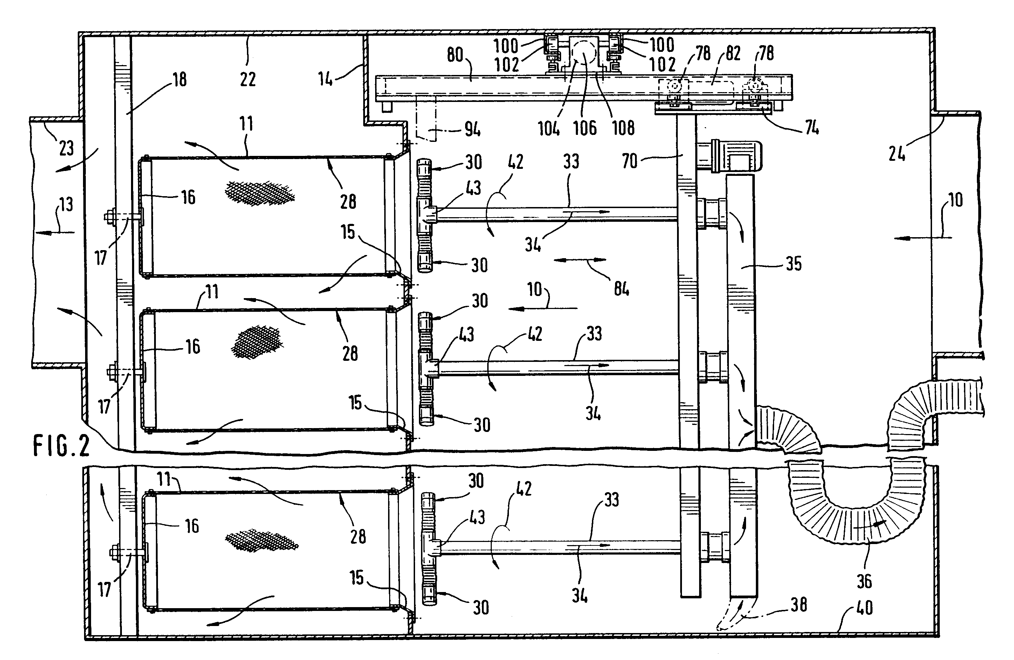

Die Trommelfilter 11 sind kreiszylindrische Filterflächen und erstrecken sich nahezu über die ganze Länge der Filtertrommel und bestehen aus Filtertuch, Stoff, Gase, Vlies, Gewirk, Metallgewebe, Sieb, Lochgitter oder dergleichen, wie es für den jeweiligen Anwendungszweck erforderlich ist. Sie sind an einer vorderen Wand 14 jeweils über ein kegelstumpfförmiges, festes Übergangsstück 15 befestigt. Sie haben jeweils einen festen Boden 16 (Figur 2), der über einen Spannbolzen 17 mit einem Tragegestell 18 verbunden ist.

Die ganze Filteranordnung kann von einem Außengehäuse 22 umgeben sein, das einen Abströmkanal 23 aufweist. In diesem Gehäuse kann die vordere Wand 14 als Trennwand angeordnet sein. Das Außengehäuse 22 kann auch einen Zuströmkanal 24 aufweisen.

In den Trommelfiltern 11 sammeln sich innen die Fasern, der Staub oder dergleichen aus der zu filternden Luft. Deshalb muß ihre Innenseite 28 laufend abgesaugt werden.

Hierzu dienen Saugrüssel 30, die jeweils am Endbereich eines drehbaren Saug- und Antriebsrohres 33 befestigt sind. Staub, der von den Saugrüsseln 30 von der Innenseite 28 abgesaugt wurde, gelangt also durch diese Saugrüssel 30 in das Saugrohr 33 (Pfeil 34) und von dort in einen gemeinsamen Saugkasten 35, der durch einen flexiblen Absaugschlauch 36 mit einer nicht dargestellten Saugpumpe verbunden ist, wo die Fasern oder dergleichen in bekannter Weise entnommen und abgeschieden werden.

Der Saugkasten 35 hat gegebenenfalls unten eine Saugdüse 38, mit der die Fasern oder der Staub vom Boden 40 abgesaugt werden kann.

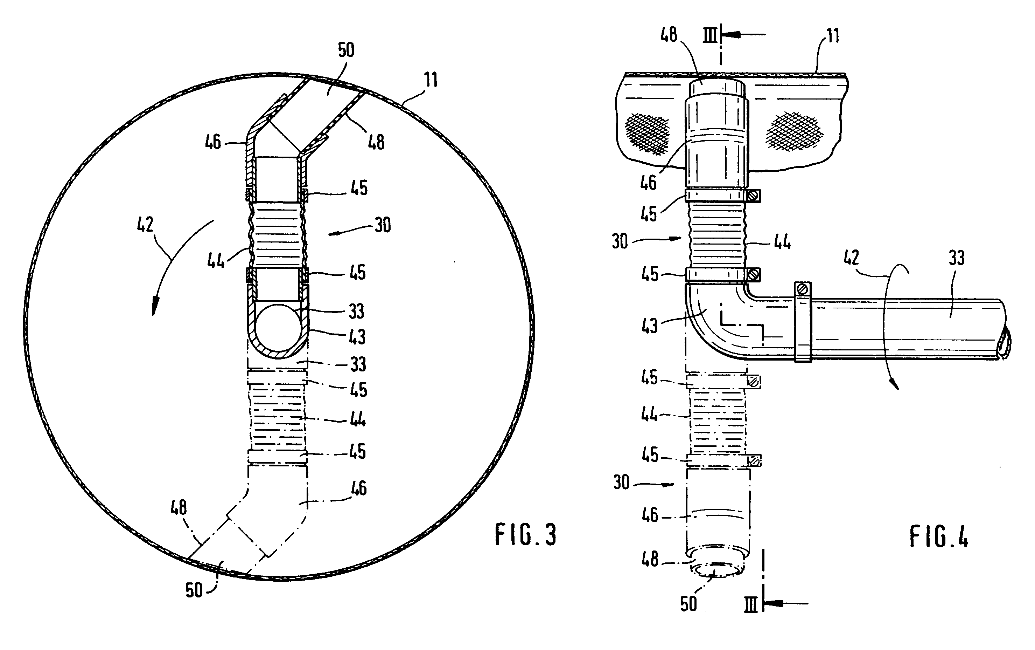

Die Saugrüssel 30 sind in Figur 3 und 4 dargestellt. Ihre Drehrichtung ist mit 42 bezeichnet.

Über ein Winkelstück 43 sind sie mit dem Saugrohr 33 verbunden. An das Winkelstück 43 schließt sich ein flexibler Schlauch 44 an, der mittels Bandschellen 45 am Winkelstück 43 und an einem äußeren Winkelstück (Knie) 46 befestigt ist, das, wie dargestellt, entgegen der Drehrichtung 42 um ca. 40° gegenüber der exakt radialen Richtung abgewinkelt ist. In ihm ist die Saugdüse 48, die im Betrieb durch Reibung am Trommelfilter 11 allmählich verschleißt, als auswechselbares Rohr befestigt. Da sie schräg abgeschnitten ist, ist ihre Saugöffnung 50 oval. Diese Saugöffnung streift bevorzugt an der Innenseite des abzusaugenden Trommelfilters 11 entlang, um eine gründliche Reinigung zu erreichen.

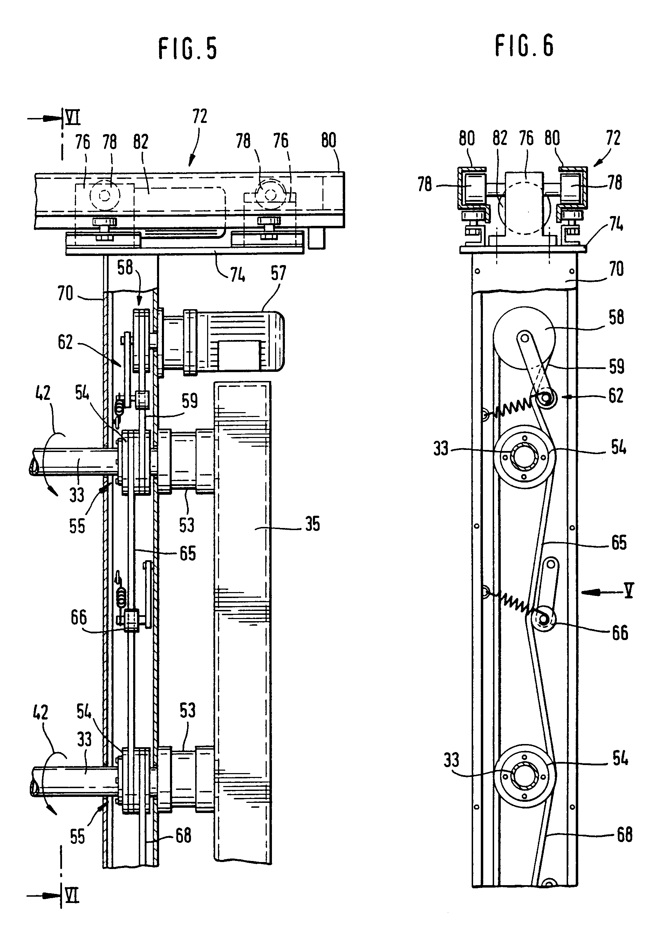

Figur 5 zeigt den Saugkasten 35. Dieser ist über luftdichte Drehverbindungen 53 mit den Saugrohren 33 verbunden. Diese haben zu ihrem drehenden Antrieb Riemenscheiben 54, an deren Vorderseiten sie mittels einer Flanschverbindung 55 befestigt sind.

Zum Antrieb der Riemenscheiben 54 dient ein Elektromotor 57, der über eine Riemenscheibe 58 und einen Riemen 59 die obere Riemenscheibe 54 antreibt. Hierzu ist auch ein Spannglied (Spannrolle) 62 bekannter Bauart für den Riemen 59 vorgesehen.

Die obere Riemenscheibe 54 ist ihrerseits über einen Riemen 65 mit der nächstunteren Riemenscheibe 54 verbunden, und auch diesem Riemen 65 ist wieder eine Spannrolle 66 bekannter Bauart zugeordnet. Von der unteren Riemenscheibe 54 geht ein weiterer Antriebsriemen 68 zur nachstunteren, in Figur 5 und 6 nicht mehr dargestellten Riemenscheibe; das Ausführungsbeispiel gemäß Figur 1 hat drei Saugrohre 33 und folglich drei Riemenscheiben 54, die alle vom Elektromotor 57 mit der gleichen Drehrichtung 42 und der gleichen Drehzahl angetrieben werden.

Die Anordnung mit den Riemen 59, 65, 68 ist in einem geschlossenen Kasten 70 angeordnet, damit sie vor Flugstaub geschützt ist. Dieser Kasten 70 ist oben an einem Wagen 72 aufgehängt, und zwar mittels einer Trageschiene 74, an der über entsprechende Trageglieder 76 insgesamt vier Rollen 78 drehbar befestigt sind. Diese Rollen sind in zwei horizontalen Schienen 80 mittels eines Elektromotors 82 verfahrbar. Werden die Rollen 78 in den Schienen 80 verfahren, so werden die Saugrohre 33 in Richtung des Pfeiles 84 (Figur 1 und 2) hin- und herbewegt. Da sie sich hierbei gleichzeitig drehen, saugen die Saugrüssel 30 die Innenseite der Trommelfilter 11 schraubenlinienförmig ab. Befinden sich, wie in Figur 1 und 2 dargestellt, die Saugrüssel 30 zu Beginn einer solchen Bewegung außerhalb der Trommelfilter 11, so werden durch das kegelstumpfförmige Übergangsstück 15 zunächst ihre balgenartigen Abschnitte 44 radial etwas zusammengepreßt, was dort eine gewisse Vorspannung bewirkt. Beim Absaugen fahren also die Saugrüssel 30 unter ständiger Drehung in die Trommelfilter 11 hinein und anschließend unter ständiger Drehung wieder aus ihren heraus, wobei der Antrieb durch den Elektromotor 82 bewirkt wird.

Die Schienen 80 sind Bestandteil eines Führungsrahmens 90, dessen Form am besten aus Figur 1 hervorgeht. Dieser hat zwei senkrecht angeordnete rechteckförmige Rahmenabschnitte 92 und 94, an deren Oberseite die beiden Schienen 80 befestigt sind. Unten hat der Rahmen 90 eine horizontale Führungschiene 96, die zur Führung des unteren Endes des Kastens 70 dient, was in Figur 2 nicht dargestellt ist. So wird ein geschlossener Rahmen 90 gebildet.

Dieser geschlossene Rahmen 90 ist seinerseits aufgehängt an Schienen 100, die an der Decke des Gehäuses 22 befestigt sind und senkrecht zu den Schienen 80 verlaufen. Wie die Schienen 80 sind auch die Schienen 100 im Querschnitt U-förmig ausgebildet und führen vier Rollen 102, die von einem Elektromotor 104 antreibbar sind. Die Rollen 102 tragen über Zwischenglieder 106 eine Platte 108, die ihrerseits mit der Oberseite der Schienen 80 fest verbunden ist.

Wird in der in Figur 1 dargestellten Stellung der Elektromotor 104 betätigt, so verfährt er den Rahmen 90 in Richtung des Pfeiles 110.

Wie man Figur 1 ohne weiteres entnimmt, sind die zwölf dargestellten Trommelfilter 11 nach Art einer Matrix in Form von drei waagerechten Reihen 111, 112, 113 sowie in Form von vier vertikalen Kolumnen 115 bis 118 angeordnet. Wie man Figur 1 ebenfalls ohne weiteres entnimmt, hat der Rahmen 90 so viele Saugrohre 33, nämlich drei Stück, welche vertikal übereinander angeordnet sind, daß er immer eine vertikale Kolumne auf einmal absaugen kann, z.B. in Figur 1 die Kolumne 117.

Ist so z.B. die Kolumne 117 abgesaugt worden, so kann anschließend mittels des Elektromotors 104 der Rahmen 90 zur nächsten Kolumne 116 (oder gleich zur übernächsten Kolumne 115) verfahren werden und diese absaugen.

Man braucht also bei dieser erfindungsgemäßen Anordnung weniger Sauggeräte als man Trommelfilter hat, und wenn Reparaturen an den Trommelfiltern auftreten, kann man ohne weiteres eine Kolumne von Trommelfiltern 11 "überspringen", die gerade repariert wird.

Damit der Rahmen 90 bei der Bewegung durch den Elektromotor 104 auch unten aufgeführt wird, ist dort am Boden eine entsprechende Führungsschiene 120 von T-förmigem Querschnitt vorgesehen, in die ein (nicht dargestelltes) Führungsglied an der Unterseite des Rahmenteils 96 eingreift.

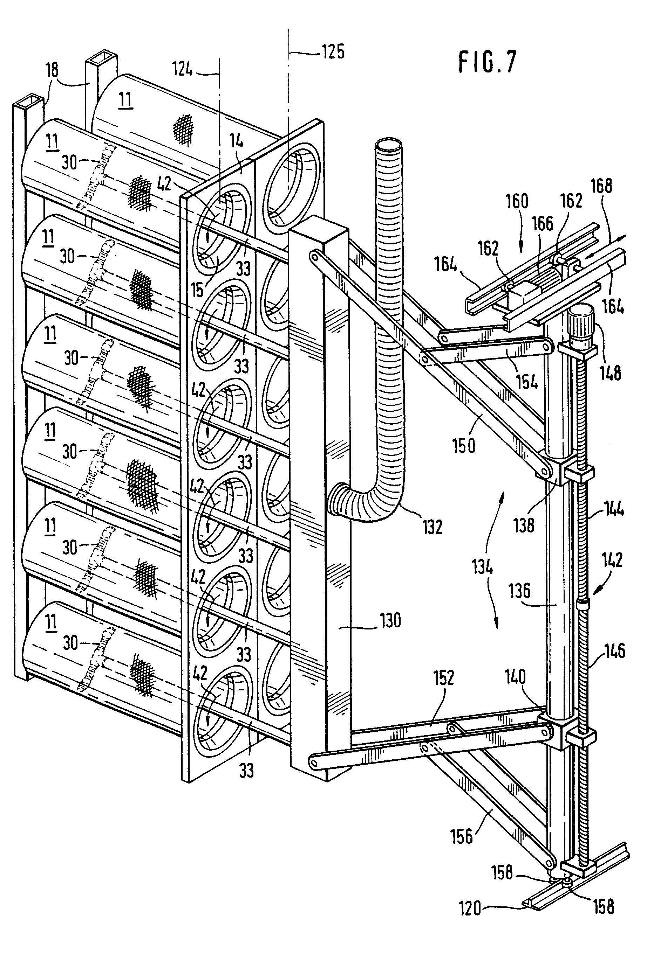

Figur 7 zeigt eine Variante mit zwei parallelen Kolumnen 124, 125, welche jeweils übereinander sechs Trommelfilter 11 enthalten. Die Ausgestaltung und Befestigung dieser Trommelfilter ist gleich wie bei den Figuren 1 bis 6, so daß dieselben Bezeichnungen wie dort verwendet werden und auf die dortige Beschreibung verwiesen werden kann.

Die Saugrüssel 30 und Saugrohre 33 entsprechen ebenfalls dem ersten Ausführungsbeispiel. Die Saugrohre 33 sind hier an einem gemeinsamen Saugkasten 130 angeordnet, von dem ein Absaugschlauch 132 zur (nicht dargestellten) Absaugung führt. Im Saugkasten 133 befindet sich auch der Antrieb der Saugrohre 33, der Figur 5 und 6 entsprechen kann.

Zur horizontalen Verschiebung des Saugkastens 130 dient hier ein Scherenantrieb 134. Dieser hat eine vertikale Führungssäule 136, auf der zwei Gleitstücke 138, 140 verschiebbar angeordnet sind. Zu ihrem Antrieb dient, wie dargestellt, eine Gewindespindel 142, die oben mit einem Linksgewinde 144 und unten mit einem Rechtsgewinde 146 versehen ist und die durch einen Elektromotor 148 antreibbar ist. Das Linksgewinde 144 steht im Eingriff mit einem entsprechenden Innengewinde des Gleitstücks 138, das Rechtsgewinde 146 im Eingriff mit einem entsprechenden Innengewinde des Gleitstücks 140. Wird also die Spindel 142 vom Elektromotor 148 gedreht, so bewegen sich die Gleitstücke 138, 140 entweder zueinander hin oder voneinander weg.

Vom Gleitstück 138 zum oberen Ende des Saugkastens 130 führt ein Hebel 150. Ebenso führt vom Gleitstück 140 zum unteren Ende des Saugkastens 130 ein Hebel 152. Die Hebel 150, 152 sind, wie dargestellt, an ihren beiden Enden angelenkt.

Etwa in der Mitte des Hebels 150 ist ein Scherenhebel 154 angelenkt, dessen anderes Ende am oberen Ende der Führungssäule 136 angelenkt ist. Ebenso ist in der Mitte des Hebels 152 ein Scherenhebel 156 angelenkt, dessen anderes Ende am unteren Ende der Führungsäule 136 angelenkt ist.

Wie man Figur 7 entnimmt, wird z.B. die von den Hebeln 150, 154 (oder 152, 156) gebildete Schere geschlossen, wenn sich das Gleitstück 138 nach oben bewegt, wobei der Saugkasten 130 in Figur 7 nach links verschoben wird.

Umgekehrt wird die von den Hebeln 150, 154 (oder 152, 156) gebildete Schere geöffnet, wenn das Gleitstück 138 nach unten verschoben wird, wobei der Saugkasten 130 in Figur 7 nach rechts verschoben wird.

Auf diese Weise wird bei Figur 7 die schraubenförmige Absaugbewegung der Saugrüssel 30 erzeugt.

Die Führungssäule 136 ist unten mittels zweier Rollen 158 an der Schiene 120 geführt, welche auch in Figur 1 dargestellt ist. Sie ist oben an einem Wagen 160 befestigt, der mittels vier Rollen 162 in zwei horizontalen Schienen 164 verfahrbar ist, die -völlig analog den Schienen 100 der Figur 1 und 2-an der Decke des Gehäuses 22 befestigt sind. Zum Antrieb der Rollen 158 dient auch hier ein Elektromotor 166, und mittels dieses Motors kann die Führungssäule 136 in Richtung des Pfeiles 168 von der Kolumne 124 zur Kolumne 125 gefahren werden oder umgekehrt. Man erspart sich so den Rahmen 90 des ersten Ausführungsbeispiels.

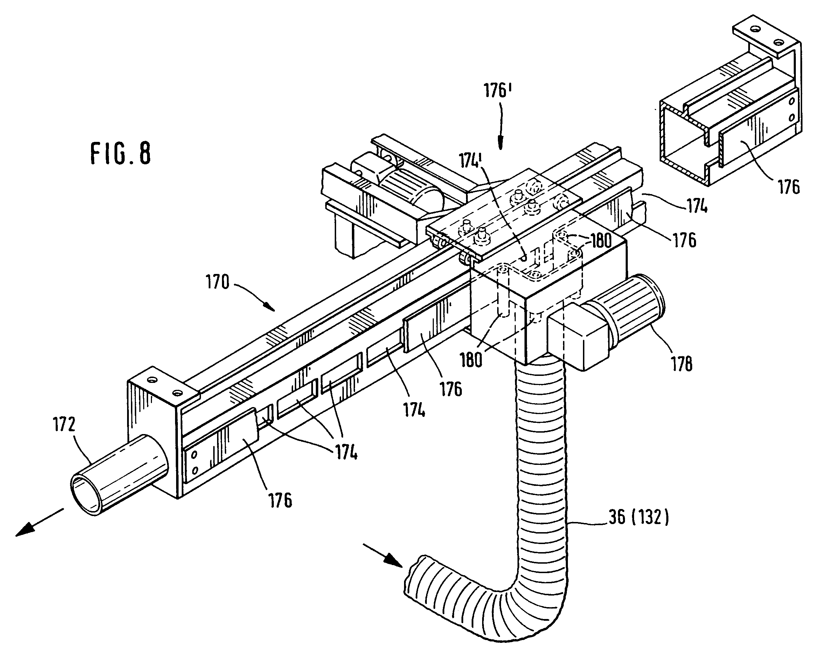

Figur 8 zeigt, wie der Absaugschlauch 36 bzw. 132 an eine stationäre Absaugung angeschlossen werden kann, die an einem stationären horizontalen Hohlbalken 170 angeschlossen ist. Von diesem führt ein Rohr 172 zu einer nicht dargestellten Absaugpumpe.

Der stationäre Hohlbalken 170 ist auf seiner einen Längsseite mit Saugöffnungen 174 versehen, die durch ein flexibles Ventilband 176 verschlossen sind.

Auf dem Hohlbalken 170 ist ein Wagen 176' mittels eines Elektromotors 178 verfahrbar, und an diesen Wagen 176' ist der Absaugschlauch 36 (bzw. 132) angeschlossen. In diesem Wagen sind, wie dargestellt, vier Umlenkrollen 180 vorgesehen, um die das Ventilband 176 so umgelenkt wird, daß es dort eine Saugöffnung 174 freigibt. Je nach Stellung des Wagens 176' wird der Schlauch 36 bzw. 132 so an eine geeignete Saugöffnung 174 angeschlossen.

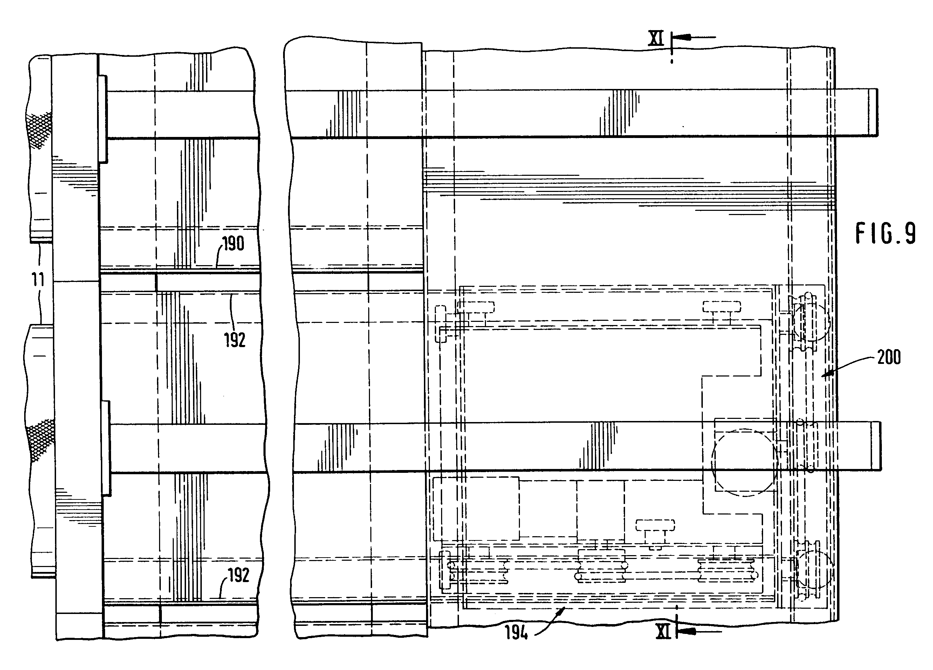

Die Figur 9 bis 11 zeigen eine Anordnung, bei der der Rahmen 90 ebenfalls entfallen kann und durch ein System von parallelen Schienen ersetzt wird.

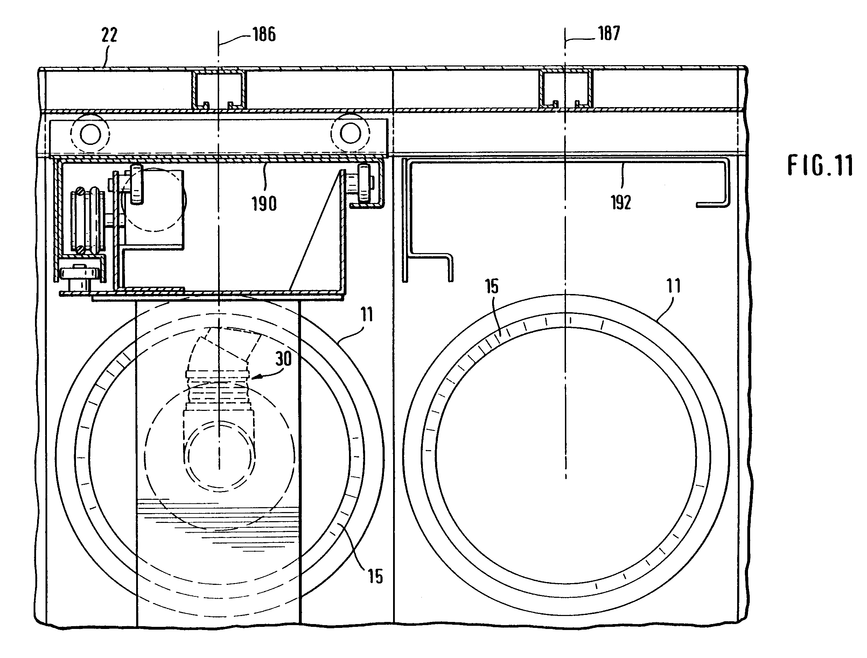

Hierzu ist, wie Figur 11 zeigt, jeder Kolumne 186, 187 von Trommelfiltern 11 eine separate Schienenanordnung zugeordnet, nämlich der Kolumne 186 eine Schienenanordnung 190, und der Kolumne 187 eine Schienenanordnung 192. Diese Schienenanordnungen 190, 192 sind stationär unterhalb der Decke des Gehäuses 22 montiert.

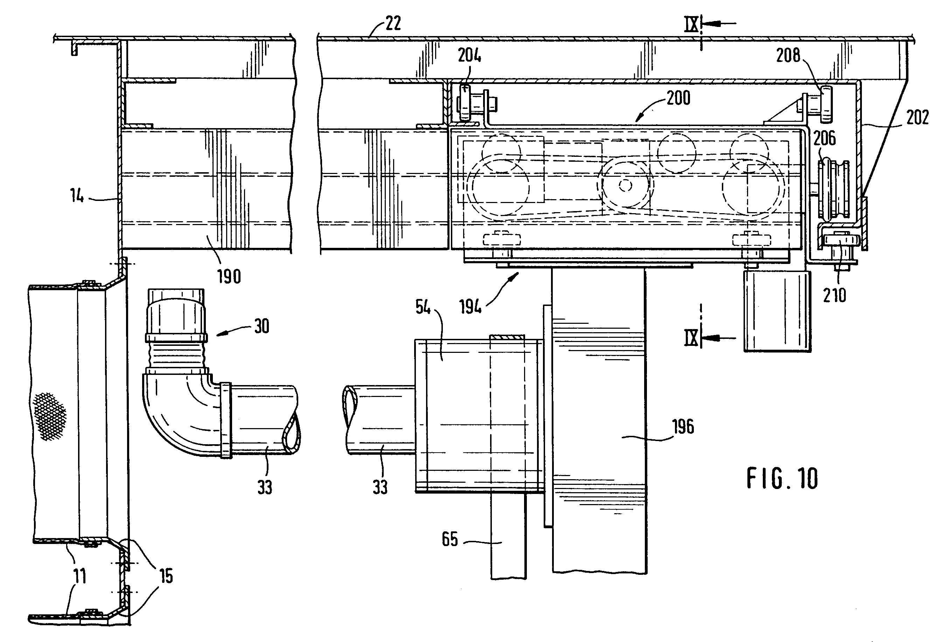

Die Schienenanordnungen 190 und 192 entsprechen in ihrer Länge der Länge der Trommelfilter 11 + einem Zuschlag, so daß ein Wagen 194, der den Saugkasten 196 und die daran angeordneten Saugrohre 33 trägt, in einer solchen Schienenanordnung in Figur 10 von rechts nach links fahren kann, wobei die Saugrüssel 30 in die Trommelfilter 11 der betreffenden Kolumne 186 oder 187 eintauchen und diese von innen schraubenlinienförmig absaugen.

Im ausgefahrenen Zustand gemäß den Figuren 9 bis 11 befindet sich der Wagen 194 außerhalb der Schienenanordnungen 190 oder 192 und in einem quer verschiebbaren Wagen 200, der in einer Schienenanordnung 202, deren exakte Form aus Figur 10 hervorgeht, verfahrbar ist. Die Schienenanordnung 202 verläuft senkrecht zu den Schienenanordnungen 190 und 192. In der Schienenanordnung 202 ist der Wagen 200 mittels Rollen 204, 206 aufgehängt und mittels Rollen 208, 210 in verschiedenen Richtungen geführt.

Man kann so mittels des Wagens 200 die gewünschte Kolumne 186 oder 187 anfahren und dann mittels des Wagens 194 diese Kolumne absaugen. Der Rahmen 90 nach Figur 1 kann so entfallen.

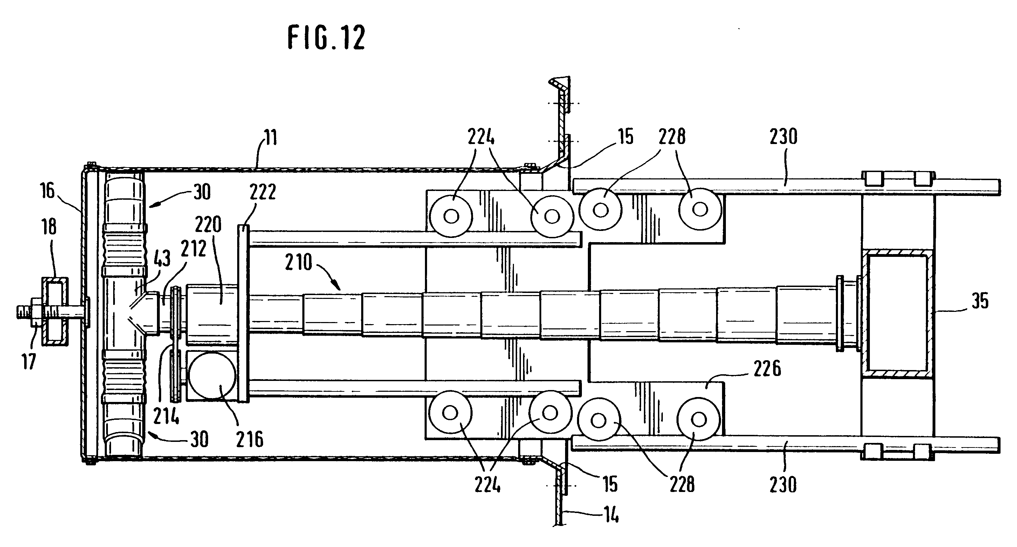

Figur 12 zeigt eine Variante, bei der das Saugrohr als Teleskoprohr 210 aus insgesamt zehn Teleskopsegmenten ausgebildet ist, deren größtes am Saugkasten 35 angeschlossen ist. Die Saugrüssel 30 sind über ihr Winkelstück 43 mit einem Drehrohr 212 verbunden, das über einen Treibriemen 214 von einem Elektromotor 216 angetrieben wird. Das Drehrohr 212 ist mittels der Lagerung 220 mit dichten Lagern geführt, wobei die Lagerung am Traggestell 222 befestigt ist, welches seinerseits in vier Rollen 224 verschiebbar geführt ist.

Die Rollen 224 sind ihrerseits an einem Wagen 226 angeordnet, der mittels Rollen 228 in einer am Saugkasten 235 befestigten Führung 230 verschiebbar ist.

Das Teleskoprohr 210 wird also dadurch ausgefahren, daß mittels einer nicht dargestellten Vorrichtung das Traggestell 222 und der Wagen 226 in Figur 12 nach rechts verfahren werden, wobei die Saugrüssel 30 wiederum in schraubenlinienförmiger saugender Bewegung die Innenseite des Trommelfilters 11 absaugen, wobei die abgesaugten Baumwollreste etc. durch das Teleskoprohr 210 zum Saugkasten 235 gelangen.

Naturgemäß sind -zusätzlich zu den bereits dargestellten Varianten- weitere Abwandlungen und Modifikationen möglich.

Zum Beispiel könnte man die Saugrohre 33 waagerecht nebeneinander anordnen und dann in Figur 1 nacheinander die Reihen 111, 112 und 113 absaugen.

## Patentansprüche

1. Filteranordnung mit mehreren feststehenden, nicht rotierenden Trommelfiltern (11), die von innen nach außen durchströmt werden, mit einer Absaugvorrichtung zum schraubenlinienförmigen Absaugen der Innenseite (28) jedes Trommelfilters (11) und mit mindestens einem Saugrüssel (30) mit einer Saugöffnung (50), die auf einer schraubenlinienförmigen Bahn an der gekrümmten Innenseite des Trommelfilters entlang bewegbar ist, **dadurch gekennzeichnet**, daß der Saugrüssel (30) an einem Endbereich eines drehbaren, im anderen Endbereich fliegend gelagerten Saugrohres (33, 210, 212) angeordnet ist und daß dessen einer Endbereich oder das Saugrohr in seiner Längserstreckung und somit in Längserstreckung des Trommelfilters (11) hin- und herbewegbar ausgebildet ist, um durch die Kombination dieser Hin- und Her-Verschiebebewegung (84) und der Drehbewegung (42) die Saugöffnung (50) des Saugrüssels auf einer schraubenlinienförmigen Bahn an der gekrümmten, zylinderischen Innenseite (28) des Trommelfilters (11) entlangzubewegen, wobei ferner das Saugrohr mit dem Saugrüssel vollständig aus dem Trommelfilter in Richtung der Verschiebebewegung heraus bewegbar, quer zur Verschiebebewegung verfahrbar und in mindestens ein benachbartes Trommelfilter zum Absaugen wieder einfahrbar ist.

2. Filteranordnung nach Anspruch 1, **dadurch gekennzeichnet**, daß ein die Hin- und Her-Verschiebebewegung bewirkender Antrieb neben der Mitwirkung zum Herbeiführen der schraubenlinienförmigen Absaugbewegung gleichzeitig dazu dient, den Saugrüssel in Verlängerung der Hin- und Her-Verschiebebewegung vollständig aus dem zugehörigen Trommelfilter herauszufahren.

3. Filteranordnung nach einem der vorhergehenden Ansprüche, **dadurch gekennzeichnet**, daß der Saugrüssel elastisch ausgebildet ist.

4. Filteranordnung nach einem der vorhergehenden Ansprüche, **dadurch gekennzeichnet**, daß der Saugrüssel an seinem freien Ende mit einer vorzugsweise zur Anlage gegen die Innenseite (28) des Trommelfilters (11) ausgebildeten Saugdüse (48) versehen ist.

5. Filteranordnung nach Anspruch 4, **dadurch gekennzeichnet**, daß die Saugdüse (48) gegenüber der Radialrichtung entgegen ihrer Bewegungsrichtung (42) abgewinkelt (46) ist.

6. Filteranordnung nach Anspruch 5, **dadurch gekennzeichnet**, daß die Längsachse der Saugdüse (48) mit der Radialrichtung einen Winkel von etwa 20° bis 50° einschließt.

7. Filteranordnung nach Anspruch 6, **dadurch gekennzeichnet**, daß zwischen der Saugdüse (48) und dem Saugrohr (33;210,212) ein insbesondere in radialer Richtung nachgiebiges elastisches Zwischenstück (44) vorgesehen ist.

8. Filteranordnung nach Anspruch 7, **dadurch gekennzeichnet**, daß das elastische Zwischenstück (44) im wesentlichen radial verläuft, und daß es über ein Winkelrohr (46) mit der vorzugsweise auswechselbar ausgebildeten Saugdüse (48) verbunden ist.

9. Filteranordnung nach einem der vorhergehenden Ansprüche, **dadurch gekennzeichnet**, daß am hin- und herbewegbaren Endbereich (33;212) des Saugrohres eine Mehrzahl von Saugrüsseln (30) angeordnet ist.

10. Filteranordnung nach Anspruch 8 in Verbindung mit Anspruch 9, **dadurch gekennzeichnet**, daß zwei im wesentlichen diametral gegenüberliegende Saugrüssel (30) am Saugrohr vorgesehen sind.

11. Filteranordnung nach einem der vorhergehenden Ansprüche, **dadurch gekennzeichnet**, daß das Saugrohr (33) starr ausgebildet und mit einer Vorrichtung (90;130;196) verbunden ist, welche in Längsrichtung des Trommelfilters (11) verfahrbar ist.

12. Filteranordnung nach Anspruch 11, **dadurch gekennzeichnet**, daß an der verfahrbaren Vorrichtung (90;130;196) mehrere mit jeweils mindestens einem Saugrüssel (30) versehene Saugrohre (33) angeordnet sind, welche jeweils mindestens einem abzusaugenden Trommelfilter (11) zuordbar sind.

13. Filteranordnung nach Anspruch 12, **dadurch gekennzeichnet**, daß die Saugrohre (33) über die verfahrbare Vorrichtung (90; 130;196) an eine gemeinsame Absaugung angeschlossen sind.

14. Filteranordnung nach Anspruch 13, **dadurch gekennzeichnet**, daß zum Anschluß an die gemeinsame Absaugung ein flexibler Anschlußschlauch (36;132) vorgesehen ist.

15. Filteranordnung nach Anspruch 14, **dadurch gekennzeichnet**, daß ein stationärer Saugkanal (170,172) vorgesehen ist, der entlang seiner einen Längsseite mehrere Saugöffnungen (174) aufweist, die durch ein flexibles Ventilband (176) abgedeckt sind und daß die verfahrbare Vorrichtung (176') jeweils durch Abheben eines Teils des Ventilbands den Saugkanal über die freigegebene Saugöffnung mit der gemeinsamen Absaugung verbindet.

16. Filteranordnung nach Anspruch 13, **dadurch gekennzeichnet**, daß die Saugrohre (33) jeweils über eine abgedichtete Drehverbindung (53) mit einem an der verschiebbaren Vorrichtung (90;130;196) vorgesehenen, gemeinsamen Saugkanal (35) verbunden sind.

17. Filteranordnung nach Anspruch 16, **dadurch gekennzeichnet**, daß an der verfahrbaren Vorrichtung eine gemeinsame Antriebsvorrichtung (57) für die Drehung der Saugrohre (33) vorgesehen ist.

18. Filteranordnung nach Anspruch 17, **dadurch gekennzeichnet**, daß die gemeinsame Antriebsvorrichtung (57) über einen Riemenantrieb (59,65,68) die abgedichteten Drehverbindungen (53) antreibt.

19. Filteranordnung nach Anspruch 11, **dadurch gekennzeichnet**, daß die verschiebbare Vorrichtung (90;130;196) hängend ausgebildet ist.

20. Filteranordnung nach Anspruch 19, **dadurch gekennzeichnet**, daß die verschiebbare Vorrichtung (90;130) an einer Querverschiebevorrichtung (100,102,104;160) aufgehängt ist, welche ihre Querverschiebung ermöglicht, um parallel angeordnete Kolumnen (124,125) von Trommelfiltern (11) in, beliebiger Reihenfolge absaugen zu können.

21. Filteranordnung nach Anspruch 20, **dadurch gekennzeichnet**, daß mittels der Querverschiebevorrichtung das außerhalb des/der Trommelfilter befindliche Saugrohr (33;210,212) in einer quer zur Längsrichtung des Trommelfilters verlaufenden Ebene, vorzugsweise in x- und/oder y-Richtung, verfahrbar ist.

22. Filteranordnung nach Anspruch 11, **dadurch gekennzeichnet**, daß die verschiebbare Vorrichtung (130) durch einen Scherenantrieb (134) in Richtung der Längsachse der Trommelfilter (11) verschiebbar ist.

23. Filteranordnung nach Anspruch 22, **dadurch gekennzeichnet**, daß zum Antrieb der Scherenarme (150,152,154,156) eine diese Arme antreibende Gewindespindel (142) vorgesehen ist.

24. Filteranordnung nach Anspruch 11, **dadurch gekennzeichnet**, daß die verschiebbare Vorrichtung (90;196) einen Wagen (76, 78;194) aufweist, der in einer ersten Schienenanordnung verfahrbar ist, welche sein Verfahren in der Richtung der Längsachse des mindestens einen Trommelfilters (11) ermöglicht.

25. Filteranordnung nach Anspruch 24, **dadurch gekennzeichnet**, daß ein Antrieb (82) zum Verfahren des Wagens (76,78;194) in der ersten Schienenanordnung vorgesehen ist.

26. Filteranordnung nach Anspruch 25, **dadurch gekennzeichnet**, daß die erste Schienenanordnung (80) ihrerseits an einer zweiten Schienenanordnung (100) aufgehängt ist, welche sich quer zur ersten Schienenanordnung (80) erstreckt und eine Parallelverschiebung der ersten Schienenanordnung (80) in Richtung der zweiten Schienenanordnung (100) ermöglicht, um mehrere parallel angeordnete Kolumnen (115,116,117) von Trommelfiltern (11) in beliebiger Reihenfolge absaugen zu können.

27. Filteranordnung nach Anspruch 26, **dadurch gekennzeichnet**, daß eine Mehrzahl von zueinander parallelen ersten Schienenanordnungen (190,192) vorgesehen ist, daß an ihren von den Trommelfiltern (11) abgewandten Enden eine ergänzende Schienenanordnung vorgesehen ist, welche jeweils mit einem Ende einer ersten, dem Wagen im Augenblick zugeordneten Schienenanordnungen (190, 192) fluchtet und zur Aufnahme des Wagens (194) in dessen aus den Trommelfiltern (11) ausgefahrenen Stellung ausgebildet ist, und daß eine zweite Schienenanordnung (202) quer zu den ersten Schienenanordnungen (190,192) angeordnet ist, um den Wagen (194) von einer ersten Schienenanordnung (z.B. 190) zu einer anderen ersten Schienenanordnung (z.B. 192) zu transportieren.

28. Filteranordnung nach Anspruch 11, **dadurch gekennzeichnet**, daß die verschiebbare Vorrichtung eine Rollenführung (224, 228) zur Führung des Saugrohres (210,212) aufweist, und daß das Saugrohr ein Teleskoprohr (210) aufweist, welches beim Einführen eines Saugrüssels (30) in das Trommelfilter (11) ausfährt.

29. Filteranordnung nach einem der vorhergehenden Ansprüche, **dadurch gekennzeichnet**, daß die Trommelfilter (11) an ihrem offenen Ende mit einem kegelstumpfförmigen Abschnitt (15) versehen sind.

30. Filteranordnung nach einem der vorhergehenden Ansprüche, **dadurch gekennzeichnet**, daß die Trommelfilter (11) an der von ihrem offenen Ende abgewandten Seite durch einen nicht als Filter wirksamen Boden (16) verschlossen sind.

31. Filteranordnung nach einem der vorhergehenden Ansprüche, **dadurch gekennzeichnet**, daß der Boden (16) der Trommelfilter (11) an einem Stützgestell (18) befestigt ist.

## Claims

1. A filter arrangement with a plurality of fixed, non-rotating drum filters (11), through which a flow passes from the inside to the outside, with a suction device for the helical suction of the inner side (28) of each drum filter (11) and with at least one suction nose (30) with a suction opening (50), which is displaceable along a helical path on the curved inner side of the drum filter, characterised in that the suction nose (30) is arranged at one end region of a rotatable suction pipe (33, 210, 212) which is cantilever mounted at the other end region, and one end region of the suction pipe or the suction pipe per se is constructed so as to be reciprocatable in its longitudinal extension and therefore in the longitudinal extension of the drum filter (11) in order, by combining this reciprocating movement (84) with the rotary movement (42), to move the suction opening (50) of the suction nose along a helical path on the curved, cylindrical inner side (28) of the drum filter (11), furthermore the suction pipe with the suction nose being fully retractable from the drum filter in the direction of the displacement movement, being movable transversely to the displacement movement and being insertable again into at least one adjacent drum filter for suction operation.

2. A filter arrangement according to claim 1, characterised in that, as well as participating in effecting the helical suction movement, a drive effecting the reciprocating displacement is simultaneously used to fully retract the suction nose from the associated drum filter by way of an extension of the reciprocating displacement.

3. A filter arrangement according to one of the preceding claims, characterised in that the suction nose is elastic in construction.

4. A filter arrangement according to one at the preceding claims, characterised in that the suction nose is provided at its free end with a suction nozzle (48) which is preferably constructed to rest against the inner side (28) of the drum filter (11).

5. A filter arrangement according to claim 4, characterised in that the suction nozzle (48) is angled (46) relative to the radial direction away from its direction of movement (42).

6. A filter arrangement according to claim 5, characterised in that the longitudinal axis of the suction nozzle (48) forms an angle of approximately 20° to 50° with the radial direction.

7. A filter arrangement according to claim 6, characterised in that an elastic intermediate element (44), in particular flexible in the radial direction, is provided between the suction nozzle (48) and the suction pipe (33; 210, 212).

8. A filter arrangement according to claim 7, characterised in that the elastic intermediate element (44) extends substantially radially and is connected via on angle pipe (46) to the suction nozzle (48), which is preferably constructed so as to be replaceable.

9. A filter arrangement according to one of the preceding claims, characterised in that a plurality of suction noses (30) is arranged at the reciprocating end region (33; 212) of the suction pipe.

10. A filter arrangement according to claim 8 in association with claim 9, characterised in that two substantially diametrically opposed suction noses (30) are provided on the suction pipe.

11. A filter arrangement according to one of the preceding claims, characterised in that the suction pipe (33) is rigid in construction and is connected to a device (90; 130; 196) which is displaceable in the longitudinal direction of the drum filter (11).

12. A filter arrangement according to claim 11, characterised in that a plurality of suction pipes (33) provided in each case with at least one suction nose (30) is arranged on the displaceable device (90; 130; 196), each suction pipe being associated with at least one drum filter (11) which is to be cleaned by suction.

13. A filter arrangement according to claim 12, characterised in that the suction pipes (33) are connected via the displaceable device (90; 130; 196) to a common suction means.

14. A filter arrangement according to claim 13, characterised in that a flexible connection hose (36; 132) is provided for connection to the common suction means.

15. A filter arrangement according to claim 14, characterised in that a stationary suction duct (170, 172) is provided, which along one longitudinal side comprises a plurality of suction openings (174) covered by a flexible valve strip (176), and by lifting a part of the valve strip the displaceable device (176') connects the suction duct with the common suction means via the released suction opening.

16. Filter arrangement according to claim 13, characterised in that the suction pipes (33) are connected in each case via a sealed rotary connection (53) to a common suction duct (35) provided on the displaceable device (90; 130; 196).

17. A filter arrangement according to claim 16, characterised in that a common drive device (57) is provided on the displaceable device for the rotation of the suction pipes (33).

18. A filter arrangement according to claim 17, characterised in that the common drive device (57) drives the sealed rotary connections (53) via a belt drive (59, 65, 68).

19. A filter arrangement according to claim 11, characterised in that the displaceable device (90; 130; 196) has a suspended construction.

20. A filter arrangement according to claim 19, characterised in that the displaceable device (90; 130) is suspended from a cross slide device (100, 102, 104; 160), which allows for the transverse displacement of the displacement device in order to clean parallel columns (124, 135) of drum filters (11) by suction in any chosen sequence.

21. A filter arrangement according to claim 20, characterised in that, by means of the cross slide device, the suction pipe (33; 210, 212) located outside the drum filter(s) is displaceable in a plane extending transversely to the longitudinal direction of the drum filter, preferably in x and/or y directions.

22. A filter arrangement according to claim 11, characterised in that the displaceable device (130) is displaceable in the direction of the longitudinal axis of the drum filter (11) by a scissor drive (134).

23. A filter arrangement according to claim 22, characterised in that, for driving the scissor arms (150, 152, 154, 156), a threaded spindle (142) is provided which drives said arms.

24. A filter arrangement according to claim 11, characterised in that the displaceable device (90; 196) comprises a carriage (76, 78; 194), which can be displaced in a first rail arrangement which allows the carriage to be moved in the direction of the longitudinal axis of the drum filter (11), of which there is at least one.

25. A filter arrangement according to claim 24, characterised in that a drive (82) is provided for displacing the carriage (76, 78; 194) in the first rail arrangement.

26. A filter arrangement according to claim 25, characterised in that the first rail arrangement (80) is itself suspended from a second rail arrangement (100), which extends transversely to the first rail arrangement (80) and allows for a parallel displacement of the first rail arrangement (80) in the direction of the second rail arrangement (100) so as to allow for the suction-cleaning of a plurality of parallel columns (115, 116, 117) of drum filters (11) in any chosen sequence.

27. A filter arrangement according to claim 16, characterised in that a plurality of first rail arrangements (190, 192) are provided and are arranged parallel to one another, a supplementary rail arrangement is provided at the ends of the first rail arrangements remote from the drum filters (11) and is aligned with one end of a first rail arrangement (190, 192) associated with the carriage at any one time and is constructed to accommodate the carriage (194) in its position retracted from the drum filters (11), and a second rail arrangement (202) is arranged transversely to the first rail arrangements (190, 192) in order to transport the carriage (194) from one first rail arrangement (e.g. 190) to another first rail arrangement (e.g. 192).

28. A filter arrangement according to claim 11, characterised in that the displaceable device comprises a roller guide (224, 228) for guiding the suction pipe (210, 212), and the suction pipe comprises a telescopic tube (210) which extends into the drum filter (11) when the suction nose (30) is introduced.

29. A filter arrangement according to one of the preceding claims, characterised in that the drum filters (11) are provided at their open end with a frusto-conical section (15).

30. A filter arrangement according to one of the preceding claims, characterised in that the drum filters (11) are sealed at the end remote from their open and by a base (16) which does not act as a filter.

31. A filter arrangement according to one of the preceding claims, characterised in that the base (16) of the drum filters (11) is secured to a support frame (18).

## Revendications

1. Système de filtration comportant plusieurs filtres-tambours (11) fixes non tournants, traversés de l'intérieur vers l'extérieur par le fluide, et équipés chacun d'un dispositif d'aspiration, agissant sur la face interne (28) de chaque filtre-tambour (11) et comportant un museau d'aspiration (30) dont l'ouverture (50) peut se déplacer en décrivant une hélice le long de la face interne courbe du filtre-tambour, caractérisé en ce que :
- le museau d'aspiration (30) est disposé à l'extrémité d'un tube d'aspiration (33, 210, 212) rotatif, et monté flottant par son autre extrémité, une extrémité de tube ou le tube tout entier pouvant aller et venir selon sa direction longitudinale du filtre-tambour,
- la combinaison du coulissement de va et vient (84) et du mouvement de rotation (42) est telle que l'ouverture d'aspiration (50) du museau suit un parcours hélicoïdal le long de la paroi interne cylindrique courbe (28) du filtre-tambour (11),
- le tube d'aspiration avec son museau peut, par coulissement, sortir du filtre-tambour, se déplacer transversalement par rapport à ce coulissement et s'introduire au moins dans un filtre-tambour voisin, pour y agir par aspiration.

2. Système de filtration selon la revendication 1, caractérisé en ce qu'un dispositif d'entraînement produisant le coulissement de va et vient non seulement intervient dans l'obtention du mouvement hélicoïdal d'aspiration, mais sert également à faire sortir le museau d'aspiration entièrement du filtre-tambour en prolongeant le coulissement de va et vient.

3. Système de filtration selon une des revendications précédentes, caractérisé en ce que le museau d'aspiration est de constitution élastique.

4. Système de filtration selon une des revendications précédentes, caractérisé en ce que le museau d'aspiration, à son extrémité libre, est muni d'une buse d'aspiration (48) constituée de préférence pour être en appui contre la surface interne (28) du filtre-tambour.

5. Système de filtration selon la revendication 4, caractérisé en ce que la buse d'aspiration (48) présente un coude (46) qui, par rapport à la direction radiale, est incliné en sens opposé à sa rotation (42).

6. Système de filtration selon la revendication 5, caractérisé en ce que l'axe longitudinal de la buse d'aspiration (48) fait, avec la direction radiale, un angle compris entre 20 et 50°.

7. Système de filtration selon la revendication 6, caractérisé en ce qu'une pièce intermédiaire élastique (44), flexible en direction radiale, est intercalée entre la buse d'aspiration (48) et le tube d'aspiration (33 ; 210, 212).

8. Système de filtration selon la revendication 7, caractérisé en ce que la pièce intermédiaire élastique (44) est radiale dans sa majeure partie, laquelle est reliée par un tube coudé (46) à la buse d'aspiration (48), amovible de préférence.

9. Système de filtration selon une des revendications précédentes, caractérisé en ce que l'extrémité mobile (33 ; 212) du tube d'aspiration est équipée de plusieurs museaux d'aspiration (30).

10. Système de filtration selon la revendication 8 en liaison avec la revendication 9, caractérisé en ce que le tube d'aspiration porte deux museaux d'aspiration diamétralement opposés.

11. Système de filtration selon une des revendications précédentes, caractérisé en ce que le tube d'aspiration (33) est rigide et relié à un dispositif (90 ; 130 ; 196) pouvant se déplacer selon la direction longitudinale du filtre-tambour.

12. Système de filtration selon la revendication 11, caractérisé en ce que le dispositif mobile (90 ; 130 ; 196) est équipé de plusieurs tubes d'aspiration (33) portant chacun au moins un museau d'aspiration (30) et pouvant chacun être associés à au moins un filtre-tambour (11) à traiter par aspiration.

13. Système de filtration selon la revendication 12, caractérisé en se que les tubes d'aspiration (33) sont reliés par l'intermédiaire du dispositif mobile (90 ; 130 ; 196) à une aspiration commune .

14. Système de filtration selon la revendication 13, caractérisé en ce que la liaison à l'aspiration commune est assurée par un tube flexible de raccordement (36 ; 132).

15. Système de filtration selon la revendication 14, caractérisé en ce qu'il comporte un canal d'aspiration (170, 172) fixe, portant sur son côté longitudinal plusieurs ouvertures d'aspiration (174) recouvertes par une bande flexible (176) jouant le rôle de soupape, le dispositif mobile (176') mettant en liaison avec l'aspiration commune le canal d'aspiration par l'intermédiaire d'une ouverture d'aspiration libérée par soulèvement d'une partie de la bande flexible.

16. Système de filtration selon la revendication 13, caractérisé en ce que chacun des tubes d'aspiration (33) est relié à un canal d'aspiration commun (35) monté sur le dispositif mobile (90 ; 130 ; 196), par l'intermédiaire d'un point rotatif étanche (53).

17. Système de filtration selon la revendication 16, caractérisé en ce que le dispositif mobile est équipé d'un entraîneur commun (57) assurant la rotation des tubes d'aspiration (33).

18. Système de filtration selon la revendication 17, caractérisé en ce que l'entraîneur commun (57) fait tourner les liaisons rotatives étanches (53) par un jeu de courroies (59, 65, 68).

19. Système de filtration selon la revendication 11, caractérisé en ce que le dispositif mobile (90 ; 130, 196) est monté en suspension.

20. Système de filtration selon la revendication 19, caractérisé en ce que le dispositif mobile (90 ; 130) est suspendu à un dispositif coulissant transversalement (100, 102, 104 ; 160) qui permet au dispositif mobile de se déplacer transversalement de manière à traiter par aspiration, dans n'importe quel ordre successif, les colonnes parallèles (124, 125) de filtres-tambours.

21. Système de filtration selon la revendication 20, caractérisé en ce que le dispositif de coulissement transversal permet de déplacer le tube d'aspiration (33 ; 210 , 212) situé à l'extérieur du ou des filtres-tambours, dans un plan perpendiculaire à la direction longitudinale du filtre-tambour, selon une direction x ou y de préférence.

22. Système de filtration selon la revendication 11, caractérisé en ce que le dispositif mobile (130) peut se déplacer, sous l'action d'un entraîneur à bras en ciseaux (134), selon la direction longitudinale des filtres-tambours (11).

23. Système de filtration selon la revendication 22, caractérisé en ce qu'une tige filetée (142) assure l'entraînement des bras en ciseaux (150, 152, 154, 156).

24. Système de filtration selon la revendication 11, caractérisé en ce que le dispositif mobile (90, 196) comprend un chariot (76, 78 ; 196) qui peut coulisser dans un premier système de rails assurant son déplacement selon la direction de l'axe longitudinal d'au moins un filtre-tambour.

25. Système de filtration selon la revendication 24, caractérisé en ce que l'entraîneur (82) est prévu pour assurer le déplacement du chariot (76, 78 ; 194) dans le premier système de rails.

26. Système de filtration selon la revendication 25, caractérisé en ce que le premier système de rails (80) est lui-même suspendu à un second système de rails (100) monté transversalement au premier et permettant à celui-ci de se déplacer parallèlement à lui-même, selon la direction du second système (100), de manière à pouvoir traiter par aspiration, dans n'importe quel ordre successif, plusieurs colonnes parallèles (115, 116, 117) de filtres-tambours.

27. Système de filtration selon la revendication 26, caractérisé en ce qu'il comporte plusieurs premiers systèmes de rails (190, 192) parallèles entre eux, complétés à leurs extrémités opposées aux tambours-filtres par un système de rails, aligné avec une extrémité d'un premier système de rails (190, 192) associée à cet instant au chariot et qui est constitué pour recevoir le chariot (194) lorsqu'il sort des filtres-tambours, un second système de rails (202), transversal aux premiers (190, 192) étant disposé pour assurer le transfert du chariot (194) du premier système (par exemple 190) à un autre premier système (par exemple 192).

28. Système de filtration selon la revendication 11, caractérisé en ce que le dispositif mobile est équipé de galets (224, 228) assurant le guidage du tube d'aspiration (210, 212) comportant un tube télescopique (210) qui se développe lorsqu'un museau d'aspiration (30) pénètre dans le filtre-tambour.

29. Système de filtration selon une des revendications précédentes, caractérisé en ce que chaque filtre-tambour (11), à son extrémité ouverte, comporte une partie conique (15).

30. Système de filtration selon une des revendications précédentes, caractérisé en ce que chaque filtre-tambour (11) est obturé, du côté opposé à son extrémité ouverte, par un fond non filtrant (16).

31. Système de filtration selon une des revendications précédentes, caractérisé en ce que le fond (16) du filtre-tambour (11) est fixé à une structure porteuse (18).
